# FASCICULE DE BREVET EUROPEEN

(11) **EP 0 377 207 B1**
(45) Date de publication et mention de la délivrance du brevet: **18.05.1994**
(21) Numéro de dépôt: 89123961.8
(22) Date de dépôt: 27.12.1989
(51) Int. Cl.: H01S 3/094, H01S 3/06, H01S 3/091

(54) **Laser à barreau avec pompage optique par source à plage d'émission étroite**
Optisch gepumpter Stablaser mit schmaler Pumpquellen-Emissionsfläche
Rod laser optically pumped by a source with a narrow emitting surface

(30) Priorité: 04.01.1989 FR 8900044
(43) Date de publication de la demande: 11.07.1990
(73) Titulaire: LASERDOT, F-75116 Paris (FR)
(72) Inventeur: Cabaret, Louis, Plessis Saint Benoist F-91410 Dourdan (FR); Girard, Geneviève, F-78350 Jouy en Josas (FR); Pinson, Pierre, F-91640 Briis sous Forges (FR); De Saxce, Thibaut, F-91120 Palaiseau (FR)
(74) Mandataire: Weinmiller, Jürgen

(56) Documents cités:
- US-A- 4 756 002
- IBM TECHNICAL DISCLOSURE BULLETIN, vol. 19, no. 2, juillet 1976, pages 625-626; E.A. CUNNINGHAM: "Collimated light source with laser diode and microcylindrical lens"
- APPLIED OPTICS, vol. 27, no. 1, janvier 1988, pages 80-83; F. HANSON et al.: "Laser diode side pumping of neodymium laser rods"
- APPLIED OPTICS, vol. 1, no. 1, janvier 1962, pages 11-15; G.E. DEVLIN et al.: "Composite rod optical masers"

## Description

La présente invention concerne la réalisation d'un laser à pompage optique dont le milieu actif présente la forme d'un barreau. Pour constituer des sources de lumière de pompage pour un tel laser il est connu d'utiliser des diodes laser. Une telle diode est constituée d'une plaquette semi-conductrice et émet sa lumière à partir d'une plage d'émission étroite dont les deux dimensions peuvent être par exemple 1000 nm et 10 mm. Le faisceau de pompe formé présente alors des angles de divergence de 80 et 20 degrés, environ.

Un laser connu utilisant de telles sources de pompage comporte certains éléments essentiels qui lui sont communs, quant à leurs fonctions indiquées ci-après, avec un laser selon la présente invention.

Ces éléments essentiels communs sont :
- un barreau laser allongé présentant un axe longitudinal qui définit des directions radiales et circonférentielles dans des plans transversaux, le matériau de ce barreau étant apte à absorber une lumière de pompe pour alors amplifier une lumière à amplifier se propageant longitudinalement,
- au moins une source de pompage pour émettre un faisceau de pompage constitué par ladite lumière de pompe à partir d'une plage d'émission dont une largeur circonférentielle petite impose à ce faisceau de former, au moins initialement, un angle de divergence dans un dit plan transversal,
- et un réflecteur entourant ledit barreau tout en présentant au moins une fenêtre pour laisser passer ledit faisceau de pompage et constituer un piège à lumière dans lequel une fraction de cette lumière non absorbée lors d'un premier passage dans ce barreau est renvoyée vers celui-ci pour un passage ultérieur.

Un tel laser connu est décrit dans l'article : Laser diode side pumping of neodymium laser rods, Applied Optics / Vol.27, No.1 / 1 january 1988, pages 80 à 83.

Le réflecteur de ce laser permet d'augmenter le rendement énergétique global du laser d'une part en diminuant les pertes de lumière de pompe vers l'extérieur du laser, d'autre part en améliorant l'homogénéité du pompage, c'est-à-dire en rendant plus uniforme la densité de puissance de cette lumière dans le volume du barreau laser, et plus particulièrement dans la section de celui-ci.

Il reste cependant souhaitable d'augmenter encore le rendement d'un tel laser, ainsi que sa compacité, c'est-à-dire le rapport entre, d'une part la puissance lumineuse qu'il est capable de fournir, et d'autre part son encombrement.

Le document US-A-4.756.002 a proposé pour cela un laser du type précité dont le réflecteur est séparé du barreau par un manchon et dont chaque fenêtre est munie d'une lentille convergente adaptée à focaliser un faisceau de pompage dans le barreau à l'écart de l'axe, et un rétroréflecteur adapté à renvoyer le faisceau renvoyé par le réflecteur après de multiples réflexions à partir d'une telle lentille vers celle-ci.

La présente invention a notamment pour buts d'éviter des pertes de lumière de pompe vers l'extérieur d'un tel laser, et d'en augmenter l'homogénéité de pompage et la compacité.

Ces buts sont atteints selon l'invention par le laser tel qu'il est défini dans la revendication 1.

Selon des dispositions préférées:
- le laser comporte des moyens pour faire parcourir ledit intervalle annulaire par un fluide de refroidissement circulant de préférence longitudinalement. Cette disposition assure de manière simple un refroidissement efficace du barreau laser, ce qui permet d'augmenter la puissance de pompage injectée dans ce barreau, et donc la puissance du faisceau lumineux fourni,
- la source de pompage présente sa dite plage d'émission à proximité de ladite fenêtre de sorte que la distance de cette source à ce barreau est sensiblement égale à ladite largeur d'intervalle, cette dernière étant suffisante pour que ledit barreau soit sensiblement contenu dans ledit angle de divergence. Cette largeur est en même temps suffisamment petite pour que ledit barreau occupe sensiblement toute l'étendue angulaire dudit angle de divergence. Ces dispositions permettent à la fois d'obtenir une bonne homogénéité de pompage et de minimiser les pertes de lumière de pompage.
- Il comporte plusieurs dites sources de pompage se succèdant longitudinalement, ladite lentille de réduction de divergence présentant une forme cylindrique à génératrices longitudinales et à section de préférence circulaire.
- Par ailleurs, de préférence, il comporte un nombre impair de dites sources de pompage se succèdant angulairement de manière régulière autour dudit axe dudit barreau laser, ledit réflecteur présentant ledit nombre impair desdites fenêtres et de plages réflectrices entre ces fenêtres, ces plages réflectrices présentant des étendues angulaires au moins égales à celles desdites fenêtres.
- Ledit réflecteur présente la forme d'un tube de verre entourant coaxialement ledit barreau et portant un revêtement réflecteur sur sa surface extérieure, ce revêtement étant localement interrompu pour former une dite fenêtre. Cette disposition permet à la fois de constituer de manière simple le réflecteur et de canaliser dans ledit tube de verre l'écoulement longitudinal du fluide de refroidissement qui est par exemple constitué par de l'eau.
- La dite source de pompage émet une lumière de pompe dont une fréquence centrale présente un décalage spectral par rapport audit pic d'absorption. Ce décalage spectral est choisi suffisamment grand pour améliorer l'homogénéité dudit pompage grâce à une augmentation du nombre moyen des réflexions de ladite lumière de pompe sur ledit réflecteur. Il est en même temps choisi suffisamment petit pour que ce nombre de réflexions ne diminue pas sensiblement le rendement énergétique du pompage par suite de l'absorption partielle de lumière qui se produit à chaque réflexion. Il est par exemple choisi de manière que le nombre moyen de réflexions de la lumière de pompe dans le piège à lumière soit compris entre 2 et 4.

A l'aide des figures schématiques ci-jointes, on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Le mode de mise en oeuvre donné en exemple comporte les dispositions préférées mentionnées ci-dessus. Il doit être compris que les éléments mentionnés peuvent être remplacés par d'autres éléments assurant les mêmes fonctions techniques.

La figure 1 représente une vue en coupe transversale d'un laser à barreau avec pompage optique par diode laser.
La figure 2 représente une vue en perspective du réflecteur du même laser.
La figure 3 représente une vue partielle à échelle agrandie d'un détail de la fig.1.

La figure 4 représente une vue en coupe d'un laser selon cette invention.

La figure 5 représente une vue partielle à échelle agrandie d'un détail de la figure 4.

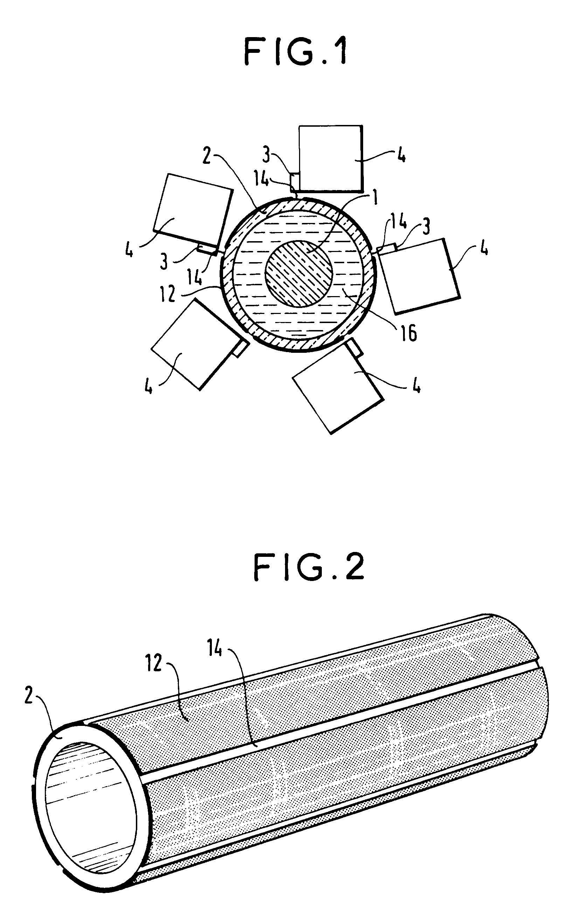

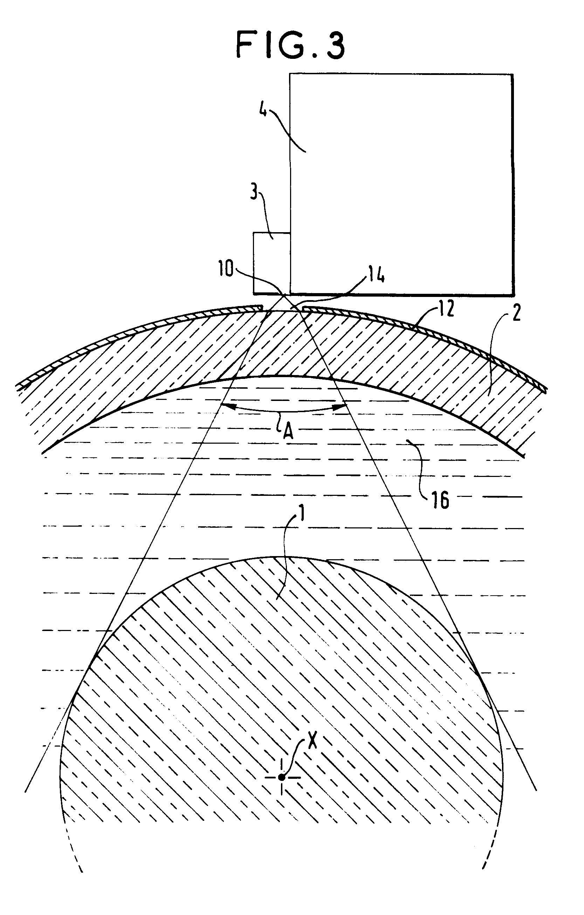

Sur les figures 1 à 3 ledit barreau est représenté en 1 et son axe en X. Ce barreau présente un diamètre relativement grand, par exemple supérieur à 5 mm. Lesdites sources de pompage sont constituées par des diodes laser telles que 3 montées sur des embases telles que 4 et présentant des plages d'émission telles que 10. La température de ces embases est régulée à l'aide de circuits de refroidissements de types connus non représentés.

Ces diodes sont réparties dans des rangées longitudinales qui sont elles mêmes réparties angulairement autour du barreau.

Ces sources pourraient cependant être de nature différente de même que les plages d'émission qui pouraient être notamment constituées par les extrémités de fibres optiques amenant une lumière de pompe produite à distance du réflecteur.

Le réflecteur est constitué d'un tube de verre 2 et son revêtement réflecteur est constitué par une métallisation 12 dont la réflectance est rendue aussi grande que possible, et qui est interrompue dans des fenêtres telles que 14. L'intervalle annulaire 16 est occupé par le fluide de refroidissement qui circule parallèlement à l'axe X.

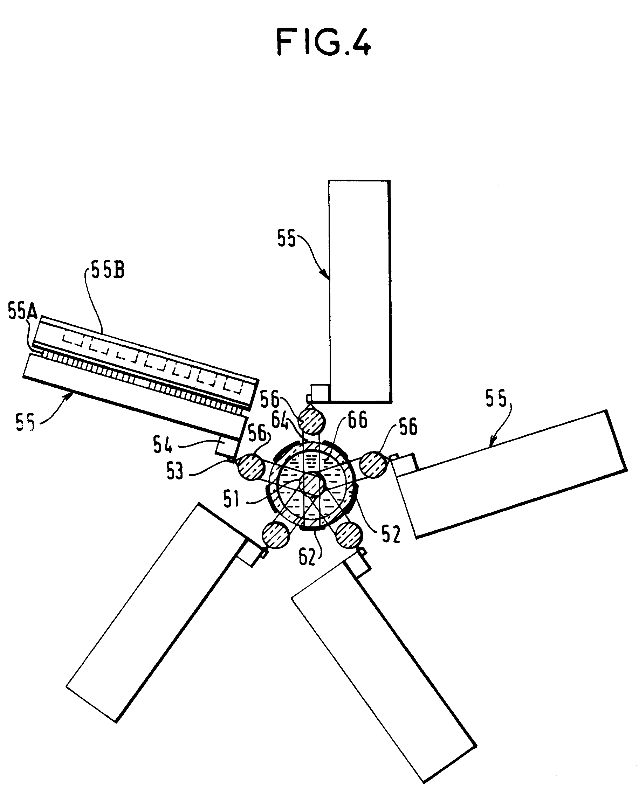

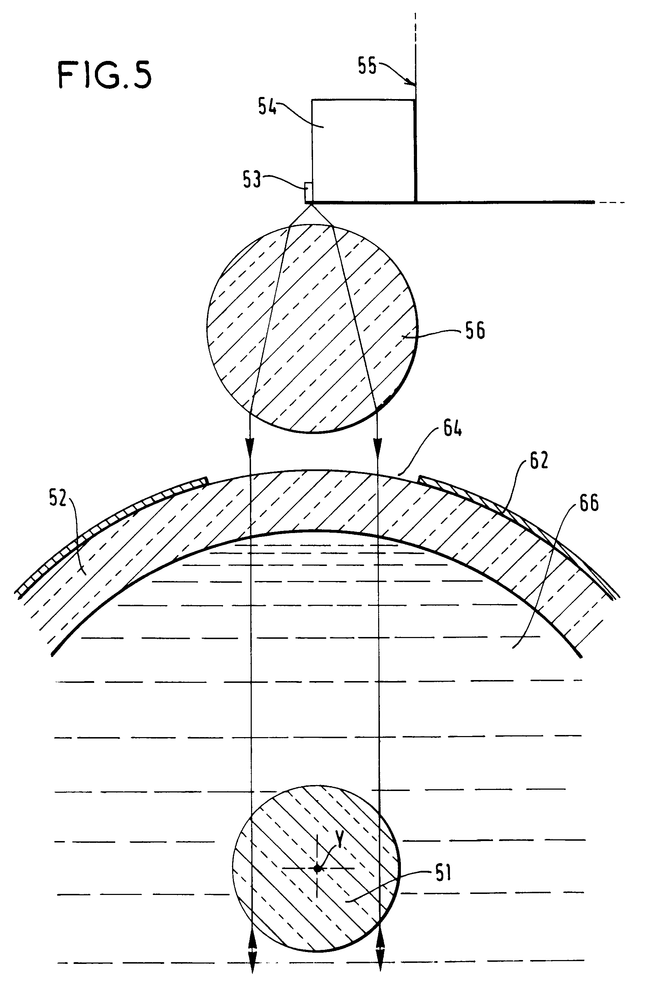

Sur les figures 4 et 5 le barreau dudit laser selon cette invention est représenté en 51. Son diamètre est relativement petit, par exemple de 2 à 3 mm.

Les sources de pompages sont constituées par des diodes laser telles que 53 qui sont analogues aux diodes 3 et qui sont soudées sur des embases telles que 54, ces dernières étant montées sur des plaques de régulation thermiques telles que 55 de type connu constituées de cuivre et munies d'éléments à effet Peltier 55A associés à des radiateurs 55B.

Le faisceau émis par une telle diode laser traverse une lentille cylindrique telle que 6 à section par exemple circulaire avec un diamètre par exemple un peu supérieur à celui du barreau laser 51, par exemple 3 à 4 mm. Ces lentilles ont des génératrices parallèles à l'axe Y du barreau laser. Elles transforment les faisceaux divergents émis par les diodes 53 en faisceaux parallèles.

Le réflecteur est constitué d'un tube de verre 52 et son revêtement réflecteur est constitué par des plages de métallisation telles que 62 séparées par des fenêtres telles que 64.

Ces plages sont en nombre impair, par exemple 3,5 ou 7 et elles présentent des étendues angulaires sensiblement égales ou un peu supérieures à celles de ces fenêtres, de manière que chaque plage de métallisation puisse recevoir complétement un faisceau parallèle provenant de la fenêtre diamétralement opposée.

L'intervalle annulaire 66 est parcouru par un liquide de refroidissement parallèlement à l'axe Y.

De telles dispositions permettent d'obtenir les avantages suivants :
- Les diodes laser étant éloignées du barreau, il n'y a pas de zone pompée d'une manière particulièrement forte alors que de telles zones existent dans les lasers dont les diodes lasers de pompage sont placées tout près du barreau.
- Les diodes lasers étant désaccordées en fréquence par rapport au pic d' absorption du matériau pompé, plusieurs passages dans le barreau sont nécessaires pour que toute la lumière émise par les diodes lasers soit absorbée. Ceci améliore l'homogénéité du pompage. Par ailleurs des diodes lasers de spectre large pourraient être utilisées sans qu'il soit nécessaire que leur spectre soit bien centré par rapport au pic d'absorption du matériau du barreau. L'utilisation de telles diodes présenterait en outre l'avantage que leur régulation thermique est moins critique que celle d'autres diodes.
- Le tube de verre permet, pour des fonctionnements à puissance moyenne élevée, de refroidir efficacement le barreau par la circulation d'un liquide.
- Dans la configuration cylindrique représentée, la section de dissipateurs thermiques sur lesquels sont fixés les diodes lasers peut être augmentée en s'écartant du centre du tube. On peut ainsi les adapter plus facilement à des éléments PELTIER par exemple.

A titre d'exemple numérique on peut citer un laser dont le matériau actif est du type Nd³⁺YAG et qui fournit une puissance moyenne de 100 W
. diamètre du barreau : 6,35 mm
. longueur : 100 mm
. pic d'absorption : 807 nm
. tube de verre : diamètre 13 mm, épaisseur : 2 mm
. largeur circonférentielle des fenêtres :0,2 mm
. puissance de chaque diode laser :10 W
. largeur circonférentielle des plages d'émission : 1000 nm
. fréquence centrale d'émission : 807 nm
. nombre de diodes lasers de 10 W nécessaires : 40
. huit diodes lasers de longueur 10 mm ou les arrivées de 8 nappes de fibres sont réparties dans une même rangée horizontale
. cinq telles rangées entourent le tube 2 dont les fenêtres présentent une largeur de 0,2 mm ce qui entraîne une perte de lumière de pompe vers l'extérieur de l'ordre de 2,5 %.
. puissance électrique nécessaire de l'ordre de 1 kW.

## Revendications

1. Laser à barreau avec pompage optique par source à plage d'émission étroite, ce laser comportant :
- un barreau laser allongé (1) présentant un axe longitudinal (X) qui définit des directions radiales et circonférentielles dans des plans transversaux, le matériau de ce barreau étant apte à absorber une lumière de pompe pour alors amplifier une lumière à amplifier se propageant longitudinalement,
- au moins une source de pompage (3) pour émettre un faisceau de pompage constitué par ladite lumière de pompe à partir d'une plage d'émission (10) dont une largeur circonférentielle petite impose à ce faisceau de former, au moins initialement, un angle de divergence dans un dit plan transversal,
- et un réflecteur (2, 12) entourant ledit barreau tout en présentant au moins une fenêtre (14) pour laisser passer ledit faisceau de pompage et constituer un piège à lumière dans lequel une fraction de cette lumière non absorbée lors d'un premier passage dans ce barreau est renvoyée vers celui-ci pour un passage ultérieur, ledit réflecteur (2, 12) laissant autour dudit barreau (1) un intervalle annulaire (16) présentant une largeur d'intervalle selon ladite direction radiale, la dite plage d'émission (10) de ladite source de pompage (3) étant disposée extérieurement à ce réflecteur en regard de ladite fenêtre (14),
- ce laser étant caractérisé par le fait qu'il comporte en outre une lentille de réduction de divergence (56) disposée entre ladite source de pompage (53) et ladite fenêtre (64) pour diminuer ou annuler l'angle de divergence dudit faisceau de pompage, de manière que ledit barreau soit sensiblement contenu dans ledit faisceau de pompage.

2. Laser selon la revendication 1, caractérisé par le fait qu'il comporte des moyens pour (2) faire parcourir ledit intervalle annulaire (16) par un fluide de refroidissement.

3. Laser selon la revendication 2, caractérisé par le fait que l'écoulement du fluide de refroidissement (16) est longitudinal.

4. Laser selon la revendication 1, caractérisé par le fait que ladite source de pompage (3) présente sa dite plage d'émission (10) à proximité de ladite fenêtre (14) de sorte que la distance de cette source à ce barreau est sensiblement égale à ladite largeur d'intervalle, cette dernière étant suffisante pour que ledit barreau soit sensiblement contenu dans ledit angle de divergence (A).

5. Laser selon la revendication 4, caractérisé par le fait que ladite largeur d'intervalle (16) est en même temps suffisamment petite pour que ledit barreau (1) occupe sensiblement toute l'étendue angulaire dudit angle de divergence (A).

6. Laser selon la revendication 1, caractérisé par le fait qu'il comporte plusieurs dites sources de pompage (53) se succédant longitudinalement, ladite lentille de réduction de divergence (56) présentant une forme cylindrique à génératrices longitudinales.

7. Laser selon la revendication 6, caractérisé par le fait que ladite lentille de réduction de divergence (56) présente une section circulaire.

8. Laser selon l'une des revendications précédentes, caractérisé par le fait qu'il comporte un nombre impair de dites sources de pompage (53) se succédant angulairement de manière régulière autour dudit axe (Y) dudit barreau laser (51), ledit réflecteur (62) présentant ledit nombre impair desdites fenêtres (64) et de plages réflectrices entre ces fenêtres, ces plages réflectrices présentant des étendues angulaires au moins égales à celles desdites fenêtres.

## Claims

1. A rod laser with optical pumping from a source having a narrow emitting area, the laser comprising:
- an elongate laser rod (1) having a longitudinal axis (X) defining radial and circumferential directions in transverse planes, the material fo the rod being suitable for absorbing pumping light in order to amplify longitudinally propagating light to be amplified;
- at least one pumping source (3) for emitting a pumping beam of said pumping light from an emitting area (10) whose small circumferential width requires said laser to form an angle of divergence in one of said transverse planes, at least initially; and
- a reflector (2, 12) surrounding said rod while leaving at least one window (14) to pass said pumping beam and constitute a light trap in which a fraction of said light that is not absorbed during a first passage through said rod is returned towards said rod for a subsequent pass;
said reflector (2, 12) leaving an annular gap (16) around said rod (1), said gap having a gap width extending along said radial direction, said emitting area (10) of said pumping source (3) being disposed outside said reflector and facing said window (14), characterized in that it also includes a divergence-reducing lens (56) disposed between said pumping source (53) and said window (64) in order to reduce or eliminate the angle of divergence of said pumping beam in such a manner that said rod is contained substantially within said pumping beam.

2. A laser according to claim 1, characterized in that it includes means (2) for causing a cooling fluid to flow along said angular gap (16).

3. A laser according to claim 2, characterized in that the cooling fluid (16) is caused to flow longitudinally.

4. A laser according to claim 2, characterized in that pumping source (3) presents its said emitting area (10) close to said window (14) in such a manner that the distance from said source to said rod is substantially equal to said gap width, which width is sufficiently great for said rod to be contained substantially in said angle of divergence (A).

5. A laser according to claim 4, characterized in that said gap width (16) is simultaneously sufficiently small for said rod (1) to occupy substantially all of the angular extent of said angle of divergence (A).

6. A laser according to claim 1, characterized in that it includes a plurality of said pumping sources (53) following one another longitudinally, with said divergence-reducing lens (56) being cylindrical in shape and having longitudinally extending generator lines.

7. A laser according to claim 6, characterized in that said divergence-reducing lens (56) is circular in section.

8. A laser according to one of the preceding claims, characterized in that it includes an odd number of said pumping sources (53) regularly distributed angularly around said axis (Y) of said laser rod (51), said reflector (62) having the same odd number of said windows (64) and of reflecting areas between said windows, said reflecting areas occupying angular extents not less than the angular extent of said windows.

## Patentansprüche

1. Laserstab mit optischer Pumpe, deren Quelle eine schmale Emissionszone besitzt, wobei der Laser enthält:
- ein länglicher Laserstab (1) mit einer Längsachse (X), die radiale und Umfangsrichtungen in Querebenen definiert, wobei das Material dieses Stabs ein Pumplicht absorbieren kann, um dann ein zu verstärkendes Licht zu verstärken, das sich in Längsrichtung fortpflanzt,
- mindestens eine Pumplichtquelle (3), die einen das Pumplicht bildenden Pumplichtstrahl ausgehend von einer Emissionszone (10) aussendet, deren geringe Ausbreitung in Umfangsrichtung es erforderlich macht, daß der Strahl zumindest ursprünglich einen Divergenzwinkel in einer Querebene bildet,
- und einen Reflektor (2, 12), der den Stab umgibt und dabei mindestens ein Fenster (14) freiläßt, um den Pumplichtstrahl durchzulassen, aber eine Lichtfalle bildet, in der ein beim ersten Durchgang durch den Stab nicht absorbierter Teil des Lichts in diesen zu einem weiteren Durchgang zurückgelenkt wird, wobei der Reflektor (2, 12) um den Stab (1) herum ein ringförmiges Intervall (16) mit einer Breite in radialer Richtung beläßt und die Emissionszone (10) der Pumplichtquelle (3) außerhalb dieses Reflektors gegenüber dem Fenster (14) angeordnet ist,
dadurch gekennzeichnet, daß der Laser außerdem eine Linse (56) zur Verringerung der Divergenz besitzt, die zwischen der Pumplichtquelle (53) und dem Fenster (64) liegt, um den Divergenzwinkel des Pumplichtstrahls zu verringern oder zu Null zu machen, so daß der Stab sich im wesentlichen im Pumplichtstrahl befindet.

2. Laser nach Anspruch 1, dadurch gekennzeichnet, daß er Mittel (2) aufweist, um das ringförmige Intervall (16) von einem vorzugsweise in Längsrichtung fließenden Kühlfluid durchströmen zu lassen.

3. Laser nach Anspruch 2, dadurch gekennzeichnet, daß die Strömung des Kühlfluids (16) in Längsrichtung verläuft.

4. Laser nach Anspruch 1, dadurch gekennzeichnet, daß die Emissionszone (10) der Pumplichtquelle (3) sich in der Nähe des Fensters (14) befindet, so daß der Abstand zwischen dieser Quelle und dem Stab im wesentlichen gleich der Breite des Intervalls ist, die ausreicht, um zu erreichen, daß der Stab sich im wesentlichen im Divergenzwinkel (A) befindet.

5. Laser nach Anspruch 4, dadurch gekennzeichnet, daß diese Breite (16) des Intervalls gleichzeitig hinreichend klein ist, damit der Stab (1) im wesentlichen die ganze winkelmäßige Ausdehnung des Divergenzwinkels (A) besetzt.

6. Laser nach Anspruch 1, dadurch gekennzeichnet, daß er mehrere Pumplichtquellen (53) enthält, die in Längsrichtung aufeinanderfolgen, wobei die die Divergenz verringernde Linse (56) eine zylindrische Form mit Mantellinien in Längsrichtung aufweist.

7. Laser nach Anspruch 6, dadurch gekennzeichnet, daß die die Divergenz verringernde Linse (56) einen kreisförmigen Querschnitt besitzt.

8. Laser nach einem der vorhergehenden Ansprüche, dadurch gekennzeichnet, daß er eine ungerade Zahl von Pumplichtquellen (53) enthält, die winkelmäßig um die Achse (Y) des Laserstabs (51) herum aufeinanderfolgen, wobei der Reflektor (62) diese ungerade Zahl von Fenstern (64) und reflektierenden Bereichen zwischen diesen Fenstern besitzt und wobei die reflektierenden Bereiche winkelmäßig zumindest so ausgedehnt sind wie die Fenster.
